# EUROPÄISCHE PATENTANMELDUNG

(11) **EP 3 590 749 A1**
(43) Veröffentlichungstag der Anmeldung: **08.01.2020**
(21) Anmeldenummer: 19178350.5
(22) Anmeldetag: 05.06.2019
(51) Int. Cl.: B60K 1/00, B60K 1/02, B60K 25/06, B60K 25/00

(54) **ELEKTRISCHES ANTRIEBSSYSTEM UND VERFAHREN ZUM BETREIBEN EINES ELEKTRISCHEN ANTRIEBSSYSTEMS**

(30) Priorität: 05.07.2018 DE 102018211081
(71) Anmelder: Robert Bosch GmbH, 70442 Stuttgart (DE)
(72) Erfinder: Vogt, Bastian, 71522 Backnang (DE); Engelberg, Ralph, 71254 Ditzingen (DE); Schmidt, Matthias, 70376 Stuttgart (DE)

(57) **Zusammenfassung**

Die vorliegende Erfindung schafft ein elektrisches Antriebssystem (1), umfassend einen Traktionsantrieb (TA) mit einer Traktionsbatterie (2), einer ersten elektrischen Maschine (EM1), einem Getriebe (G) und einer Antriebswelle (AW), wobei die Antriebswelle (AW) mit der ersten elektrischen Maschine (EM1) und mit dem Getriebe (G) verbunden ist, und wobei die erste elektrische Maschine (EM1) mittels der Traktionsbatterie (2) antreibbar ist; ein Nebenaggregat (5); und eine mechanische Kraftübertragungseinrichtung (6), wobei das Nebenaggregat (5) über die mechanischen Kraftübertragungseinrichtung (6) mit dem Getriebe (G) mechanisch verbindbar und/oder trennbar ist, wobei über die Kraftübertragungseinrichtung (6) und über das Getriebe (G) mechanische Energie auf das Nebenaggregat (5) übertragbar ist.

## Beschreibung

Die vorliegende Erfindung betrifft ein elektrisches Antriebssystem und ein Verfahren zum Betreiben eines elektrischen Antriebssystems.

### Stand der Technik

Derzeitige elektrische Antriebsachsen weisen eine elektrische Maschine mit einer Leistungselektronik und einem Getriebe auf, wobei meist beim Beschleunigen elektrische Energie in kinetische Energie des Fahrzeugs gewandelt wird und/oder auch eine Rekuperation bei bestehender Bewegung und beim Verzögern des Fahrzeugs möglich ist, wobei kinetische Energie in elektrische wandelbar ist. Meist sind solche Wandlungsprozesse jedoch verlustbehaftet. In den Fahrzeugen vorhandene Nebenaggregate, etwa für die Klimatisierung (Klimakompressor oder Wärmepumpe), müssen meist durch den Antrieb elektrisch angetrieben werden, wobei meist aus der Traktionsbatterie elektrische Energie bereitgestellt werden muss, welche dann für den Traktionsantrieb selbst meist nur noch in geringerem Maße zur Verfügung steht, wodurch die Reichweite des elektrisch betriebenen Fahrzeugs verringert sein kann.

In der DE 100 11 343 A1 wird eine Antriebsvorrichtung für ein Nebenaggregat in Kraftfahrzeugen beschrieben. Eine Antriebswelle ist mit einer Brennkraftmaschine als Antriebsmaschine verbunden und das Nebenaggregat ist mit dieser über eine Kupplung verbunden.

### Offenbarung der Erfindung

Die vorliegende Erfindung schafft ein elektrisches Antriebssystem nach Anspruch 1 und ein Verfahren zum Betreiben eines elektrischen Antriebssystems nach Anspruch 12.

Bevorzugte Weiterbildungen sind Gegenstand der Unteransprüche.

### Vorteile der Erfindung

Die der vorliegenden Erfindung zugrunde liegende Idee besteht darin, ein elektrisches Antriebssystem anzugeben, bei welchem eine mechanische Energie vom Traktionsantrieb direkt an dem Nebenaggregat genutzt werden kann, und bei dem auf eine Umwandlung von elektrischer Energie am Traktionsantrieb, etwa in Rekuperation, in mechanische Energie zum Betreiben des Nebenaggregats verzichtet werden kann und eine vorhandene mechanische Energie von dem Betrieb der elektrischen Maschine am Traktionsantrieb oder durch Rekuperation von den Antriebsrädern direkt am Nebenaggregat genutzt werden kann. Hierdurch kann der Ladegehalt der Traktionsbatterie geschont werden und die Reichweite sowie die Gesamteffizienz des elektrisch betriebenen Fahrzeugs gesteigert werden.

Erfindungsgemäß umfasst das elektrische Antriebssystem einen Traktionsantrieb mit einer Traktionsbatterie, einer ersten elektrischen Maschine, einem Getriebe und einer Antriebswelle, wobei die Antriebswelle mit der ersten elektrischen Maschine und mit dem Getriebe verbunden ist, und wobei die erste elektrische Maschine mittels der Traktionsbatterie antreibbar ist. Des Weiteren umfasst das Antriebssystem ein Nebenaggregat; und eine mechanische Kraftübertragungseinrichtung, wobei das Nebenaggregat über die mechanische Kraftübertragungseinrichtung mit dem Getriebe mechanisch verbindbar und/oder trennbar ist, wobei über die Kraftübertragungseinrichtung und über das Getriebe mechanische Energie auf das Nebenaggregat übertragbar ist.

Die mechanische Energie kann vorteilhaft durch die erste elektrische Maschine erzeugt werden und über die Antriebswelle und über das Getriebe übertragen werden, vorteilhaft auf die Kraftübertragungseinrichtung. Andererseits ist es auch möglich, dass die mechanische Energie aus Rekuperation von mit dem Getriebe über den Traktionsantrieb verbundenen Rädern erzeugt wird und auf die Kraftübertragungseinrichtung übertragen wird. Mit anderen Worten kann kinetische Energie eines Fahrzeugs, in welchem das Antriebssystem angeordnet ist, in mechanische Energie einer Drehbewegung der Zwischenwelle oder der Antriebswelle umgeformt werden und an die Kraftübertragungseinrichtung und somit an das Nebenaggregat weitergegeben werden. Bei beiden Möglichkeiten kann vorteilhaft die mechanische Energie, welche zum Betrieb des Nebenaggregats notwendig ist, vorteilhaft direkt und ohne Umwandlung in elektrische Energie, und nachträgliches elektrisches Antreiben einer zweiten elektrischen Maschine (etwa durch die Traktionsbatterie), welche dann eine Bewegungsenergie an das Nebenaggregat übertragen würde, verzichtet werden. Das Nebenaggregat benötigt vorteilhaft mechanische Energie, beispielweise eine Drehbewegung von der Antriebswelle, um betrieben zu werden.

Auf diese Weise kann eine Effizienzsteigerung des Antriebssystems erzielt werden, beispielsweise kann eine Beanspruchung der Traktionsbatterie für das Nebenaggregat bei einer Bereitstellung der mechanischen Energie, insbesondere durch die Rekuperation, vorteilhaft verringert oder sogar darauf verzichtet werden, wodurch sich eine Steigerung der möglichen Reichweite eines Fahrzeugs mit dem elektrischen Antriebssystem ergeben kann, da die Traktionsbatterie mehr Ladung behält und Wandlerverluste von kinetischer in mechanische Energie am Antriebssystem oder an einer Leistungselektronik (Inverter) verringert werden können oder vorteilhaft entfallen. Auch eine Integration von weiterer Elektronikkomponenten für das Nebenaggregat ist vorteilhaft einfach in der Achse möglich, wodurch Fertigungskosten verringert werden können.

Gemäß einer bevorzugten Ausführungsform des elektrischen Antriebssystems umfasst die mechanische Kraftübertragungseinrichtung ein Kopplungselement, mittels welchem eine Kraftübertragung vom Getriebe auf das Nebenaggregat herstellbar ist.

Das Kopplungselement kann vorteilhaft eine Kupplung, beispielsweise mit Umlenkelementen und/oder Zahnrädern umfassen, welche beispielsweise mit einem Antriebsstrang des Nebenaggregats verbunden ist, wodurch eine Kraft der Drehung der Antriebs- oder Zwischenwelle auf den Antriebsstrang des Nebenaggregats übertragen werden kann.

Gemäß einer bevorzugten Ausführungsform des elektrischen Antriebssystems ist die mechanische Kraftübertragungseinrichtung direkt mit der Antriebswelle kraftschlüssig verbindbar.

Gemäß einer bevorzugten Ausführungsform des elektrischen Antriebssystems umfasst das Getriebe eine Zwischenwelle, wobei ein erster Drehzahlbereich der Antriebswelle sich von einem zweiten Drehzahlbereich der Zwischenwelle unterscheidet, und wobei die Zwischenwelle oder die Antriebswelle mit der mechanischen Kraftübertragungseinrichtung kraftschlüssig verbindbar ist.

Die Drehzahlbereiche der Antriebswelle und der Zwischenwelle können sich vorteilhaft durch die Übersetzung im Getriebe voneinander unterscheiden. Das Nebenaggregat kann somit mit der Antriebswelle oder der Zwischenwelle verbunden werden, je nachdem welche Drehzahlen gerade für den Typ des Nebenaggregats oder für dessen Betriebsmodus vorteilhafter sind. Es ist auch möglich, dass die Kraftübertragungseinrichtung zwischen einer Verbindung des Nebenaggregats mit der Antriebswelle und der Zwischenwelle umschalten kann. Die Wahl der Welle kann dabei bezüglich einer für den jeweiligen Betrieb des Nebenaggregats optimalen Drehzahlenbereich gewählt werden.

Gemäß einer bevorzugten Ausführungsform des elektrischen Antriebssystems umfasst das Kopplungselement ein erstes Kopplungselement und ein zweites Kopplungselement, wobei über das erste Kopplungselement die mechanische Kraftübertragungseinrichtung mit der Antriebswelle und über das zweite Kopplungselement die mechanische Kraftübertragungseinrichtung mit der Zwischenwelle kraftschlüssig verbindbar ist.

Gemäß einer bevorzugten Ausführungsform des elektrischen Antriebssystems sind für einen Parksperrmodus die Antriebswelle über das erste Kopplungselement und die Zwischenwelle über das zweite Kopplungselement gleichzeitig kraftschlüssig mit der mechanischen Kraftübertragungseinrichtung verbindbar.

Die beiden Kopplungselemente können vorteilhaft jeweils mit einem Kopplungszahnrad verbunden sein, wobei diese Kopplungszahnräder dann ineinandergreifen. Bei einer Bewegung des Getriebes würde sich die Antriebswelle mit anderen Drehzahlen bewegen als die Zwischenwelle. Bei einer gleichzeitigen Verbindung der Wellen miteinander würde dann die Antriebswelle die Zwischenwelle in ihrer Drehbewegung blockieren und umgekehrt.

Gemäß einer bevorzugten Ausführungsform des elektrischen Antriebssystems umfasst das Nebenaggregat einen Klimakompressor, eine Wärmepumpe, eine Drucklufterzeugungseinrichtung, oder eine Hydraulikdruckeinrichtung.

Die Drucklufterzeugungseinrichtung kann von einer Bremse bei einem LKW umfasst sein.

Gemäß einer bevorzugten Ausführungsform des elektrischen Antriebssystems umfasst dieses eine zweite elektrische Maschine, mittels welcher das Nebenaggregat antreibbar und mit mechanischer Energie versorgbar ist.

Das Nebenaggregat kann vorteilhaft zusammen mit der ersten elektrischen Maschine, der zweiten elektrischen Maschine, dem Getriebe und der Kraftübertragungseinrichtung in eine gemeinsame Antriebsachse integriert sein.

Da die zweite elektrische Maschine vorteilhaft nur zum Antreiben des Nebenaggregats und vorteilhaft nur zum Unterstützen des Traktionsantriebs, etwa als Notantrieb, ausgelegt sein kann, kann diese vorteilhaft kleiner dimensioniert werden als die erste elektrische Maschine und vorteilhaft mit einem geringeren Spannungsniveau betrieben werden, wodurch sich vorteilhaft ein geringerer Aufwand betreffend die Verkabelung, eine zweite Batterie für die zweite elektrische Maschine, einen Berührungsschutz usw. ergeben kann. Gemäß einer bevorzugten Ausführungsform des elektrischen Antriebssystems umfasst dieses eine Steuereinrichtung, mittels welcher ein Betrieb des Traktionsantriebs und/oder des Nebenaggregats und/oder der mechanischen Kraftübertragungseinrichtung steuerbar ist.

Die Steuereinrichtung kann vorteilhaft im Bordnetz des Fahrzeugs umfasst sein.

Gemäß einer bevorzugten Ausführungsform des elektrischen Antriebssystems umfasst dieses ein drittes Kopplungselement, das mit einer Nebenantriebswelle kraftschlüssig verbindbar ist, welche mit der zweiten elektrischen Maschine mechanisch verbunden ist, wobei über das dritte Kopplungselement eine Kraftübertragung zwischen der zweiten elektrischen Maschine und dem Nebenaggregat herstellbar oder trennbar ist.

Gemäß einer bevorzugten Ausführungsform des elektrischen Antriebssystems ist der Traktionsantrieb mittels der zweiten elektrischen Maschine antreibbar, wobei die zweite elektrische Maschine über die mechanische Kraftübertragungseinrichtung mit dem Getriebe mechanisch verbindbar ist.

Die zweite elektrische Maschine kann vorteilhaft das Nebenaggregat antreiben, wenn gerade keine mechanische Energie von dem Getriebe auf das Nebenaggregat übertragen wird. Zu diesem Zweck kann die Kraftübertragung zwischen der zweiten elektrischen Maschine und dem Nebenaggregat oder die Kraftübertragung zwischen dem Getriebe und dem Nebenaggregat getrennt werden.

Erfindungsgemäß erfolgt bei dem Verfahren zum Betreiben eines elektrischen Antriebssystems in einem Verfahrensschritt S1 ein Bereitstellen eines erfindungsgemäßen elektrischen Antriebssystems, und in einem weiteren Verfahrensschritt S2 ein kraftschlüssiges Verbinden oder Trennen der Antriebswelle oder einer Zwischenwelle des Getriebes, wobei ein erster Drehzahlbereich der Antriebswelle sich von einem zweiten Drehzahlbereich der Zwischenwelle unterscheidet, mit der mechanischen Kraftübertragungseinrichtung und dem Nebenaggregat und, nach dem Verbinden, ein Übertragen mechanischer Energie vom Getriebe zum Nebenaggregat oder umgekehrt.

Das Verfahren zeichnet sich vorteilhaft auch durch die Merkmale, welche bereits in Verbindung mit dem elektrischen Antriebssystem genannt wurden, aus und umgekehrt.

Das Verbinden des Getriebes mit der Kraftübertragungseinrichtung und dem Nebenaggregat erfolgt vorteilhaft beim Traktionsantrieb mit der ersten elektrischen Maschine oder bei Rekuperation. Im Falle, dass die zweite elektrische Maschine den Traktionsantrieb antreibt oder dass keine mechanische Energie am Getriebe bereitgestellt wird, wird das Nebenaggregat vorteilhaft vom Getriebe getrennt und über die zweite elektrische Maschine angetrieben.

Gemäß einer bevorzugten Ausführung des Verfahrens wird eine zweite elektrische Maschine über ein drittes Kopplungselement und eine Nebenantriebswelle mit dem Nebenaggregat mechanisch verbunden und mechanische Energie auf dieses übertragen.

Gemäß einer bevorzugten Ausführung des Verfahrens erfolgt eine Kraftübertragung auf das Getriebe durch die zweite elektrische Maschine.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Die vorliegende Erfindung wird nachfolgend anhand des in den schematischen Figuren der Zeichnung angegebenen Ausführungsbeispiels näher erläutert.

Es zeigen:
- Fig. 1: eine schematische Darstellung eines elektrischen Antriebssystems gemäß eines Ausführungsbeispiels der vorliegenden Erfindung;
- Fig. 2: eine schematische Darstellung eines elektrischen Antriebssystems gemäß eines weiteren Ausführungsbeispiels der vorliegenden Erfindung;
- Fig. 3: eine schematische Darstellung eines elektrischen Antriebssystems gemäß eines weiteren Ausführungsbeispiels der vorliegenden Erfindung;
- Fig. 4: eine schematische Darstellung eines elektrischen Antriebssystems gemäß eines weiteren Ausführungsbeispiels der vorliegenden Erfindung; und
- Fig. 5: eine Blockdarstellung der Verfahrensschritte gemäß der vorliegenden Erfindung.

In den Figuren bezeichnen gleiche Bezugszeichen gleiche bzw. funktionsgleiche Elemente.

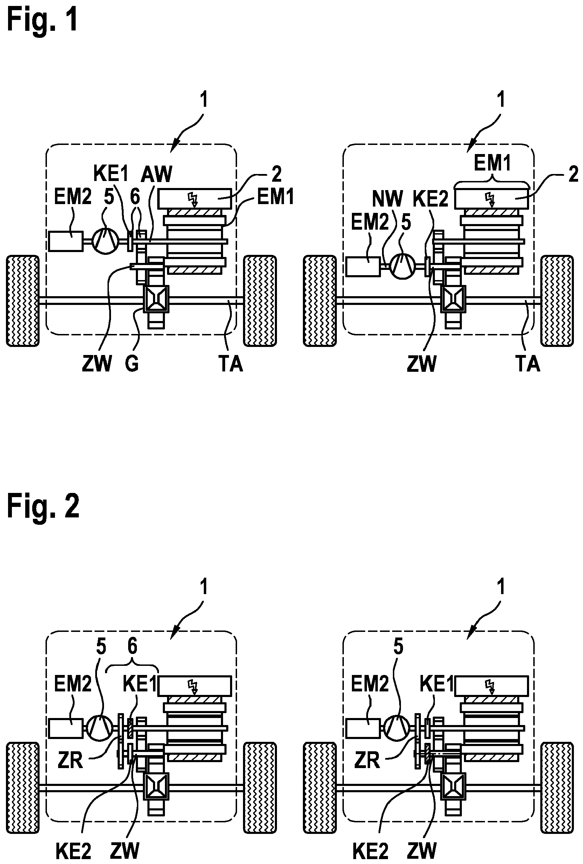

Fig. 1 zeigt eine schematische Darstellung eines elektrischen Antriebssystems gemäß eines Ausführungsbeispiels der vorliegenden Erfindung.

Das elektrische Antriebssystem 1, umfasst einen Traktionsantrieb TA mit einer Traktionsbatterie 2, einer ersten elektrischen Maschine EM1, einem Getriebe G und einer Antriebswelle AW, wobei die Antriebswelle AW mit der ersten elektrischen Maschine EM1 und mit dem Getriebe G verbunden ist, und wobei die erste elektrische Maschine EM1 mittels der Traktionsbatterie 2 antreibbar ist. Des Weiteren umfasst das elektrische Antriebssystem 1 ein Nebenaggregat 5; und eine mechanische Kraftübertragungseinrichtung 6, wobei das Nebenaggregat 5 über die mechanischen Kraftübertragungseinrichtung 6 mit dem Getriebe G mechanisch verbindbar und/oder trennbar ist, wobei über die Kraftübertragungseinrichtung 6 und über das Getriebe G mechanische Energie auf das Nebenaggregat 5 übertragbar ist.

Im linken Bild ist gezeigt, dass die Kraftübertragungseinrichtung 6 vorteilhaft ein erstes Kopplungselement KE1 umfassen kann, durch welches die Kraftübertragungseinrichtung 6 kraftschlüssig mit der Antriebswelle AW verbunden werden kann und mechanische Energie von dem Getriebe G auf das Nebenaggregat 5 übertragen werden kann, da das Nebenaggregat 5 somit über das erste Kopplungselement KE1 mit der Antriebswelle AW verbindbar sein kann. Des Weiteren ist es bei einer kraftschlüssigen Verbindung des ersten Kopplungselements KE1 auch möglich, dass mechanische Energie von der zweiten elektrischen Maschine EM2 auf das Getriebe übertragen wird, was den Traktionsantrieb TA antreiben kann. Die zweite elektrische Maschine EM2 ist vorteilhaft für ein Antreiben des Nebenaggregats 5 mit mechanischer Bewegungsenergie vorgesehen, und kann dementsprechend kleiner ausgelegt sein als die erste elektrische Maschine EM1, welche primär für den Traktionsantrieb TA vorgesehen sein kann.

Im rechten Bild ist gezeigt, dass ein zweites Kopplungselement KE2 die Kraftübertragungseinrichtung 6 kraftschlüssig mit der Zwischenwelle ZW verbinden kann und mechanische Energie von dem Getriebe G auf das Nebenaggregat 5 übertragen werden kann, da das Nebenaggregat 5 somit über das zweite Kopplungselement KE2 mit der Zwischenwelle ZW verbindbar sein kann. Die Zwischenwelle ZW weist vorteilhaft andere Drehzahlbereiche bei der Bewegung auf als die Antriebswelle AW, was je nach der Art des Nebenaggregats besser genutzt werden kann als die Antriebswelle AW oder umgekehrt. Das erste oder zweite Kopplungselement KE1 oder KE2 kann im Stillstand oder bei einer unpassenden Drehzahl des Getriebes G auch das Nebenaggregat 5 von der Antriebswelle AW oder der Zwischenwelle ZW trennen, und das Nebenaggregat kann dann nur von der zweiten elektrischen Maschine EM2 angetrieben werden. Das erste und/oder zweite Kopplungselement KE1/KE2 kann eine schaltbare Kupplung umfassen oder auch passiv und freilaufend ausgeführt sein.

Der Traktionsantrieb TA kann mit zwei Rädern verbunden sein und das Antriebssystem 1 als eine Antriebsachse ausgeformt sein.

Fig. 2 zeigt eine schematische Darstellung eines elektrischen Antriebssystems gemäß eines weiteren Ausführungsbeispiels der vorliegenden Erfindung.

Gezeigt wird im linken und im rechten Bild jeweils ein elektrisches Antriebssystem 1 ähnlich der Darstellung aus der Fig. 1, lediglich mit dem Unterschied, dass die Kraftübertragungseinrichtung 6 ein zweites Kopplungselement KE2 gleichzeitig mit einem ersten Kopplungselement KE1 umfassen kann, welche beide über Zahnräder ZR miteinander wirksam verbunden sein können. Die Zahnräder ZW greifen vorteilhaft ineinander und sind jeweils kraftschlüssig mit der Zwischenwelle ZW und mit der Antriebswelle AW verbindbar. Die Zahnräder sind vorteilhaft zwischen dem ersten Kopplungselement KE1 und dem zweiten Kopplungselement KE2 und dem Nebenaggregat 5 angeordnet.

Das linke Bild zeigt, dass wenn das erste Kopplungselement KE1 mit der Antriebswelle AW kraftschlüssig verbunden ist und mechanische Energie von der Antriebswelle AW auf die Zahnräder ZR und nachträglich auf das Nebenaggregat 5 übertragen wird, so kann das zweite Kopplungselement KE2 von der Zwischenwelle ZW getrennt sein (helle Darstellung von KE2), mit anderen Worten lose betreffend die Kraftübertragung sein.

Das rechte Bild zeigt, dass wenn das zweite Kopplungselement KE2 mit der Zwischenwelle ZW kraftschlüssig verbunden ist und mechanische Energie von der Zwischenwelle ZW auf die Zahnräder ZR und nachträglich auf das Nebenaggregat 5 übertragen wird, so kann das erste Kopplungselement KE1 von der Antriebswelle AW getrennt sein (helle Darstellung von KE1), mit anderen Worten lose betreffend die Kraftübertragung sein.

Wenn sowohl das erste Kopplungselement KE1 und auch das zweite Kopplungselement KE2 eine kraftschlüssige Verbindung gleichzeitig herstellen, wirken die Zahnräder ZR vorteilhaft als Parksperre.

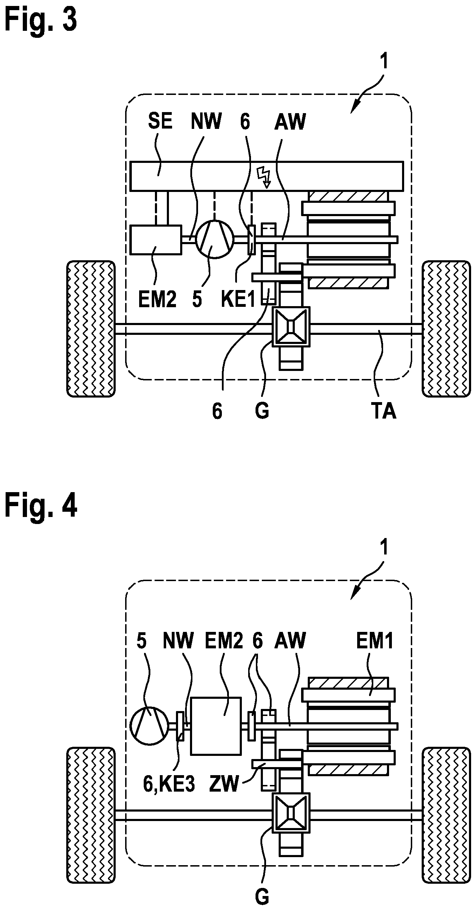

Fig. 3 zeigt eine schematische Darstellung eines elektrischen Antriebssystems gemäß eines weiteren Ausführungsbeispiels der vorliegenden Erfindung.

Die Fig. 3 zeigt ein elektrisches Antriebssystem 1 ähnlich der Darstellung aus dem linken Bild der Fig. 1, wobei zusätzlich eine Steuereinrichtung SE von dem Antriebssystem 1 umfasst sein kann, welche mit der ersten Maschine EM1 und/oder mit der zweiten Maschine EM2 und/oder mit der Kraftübertragungseinrichtung 6 und/oder dem Nebenaggregat 5, zur Steuerung dieser, verbunden sein kann.

Durch die Steuereinrichtung SE können auch eine Spannungsversorgung, eine Datenerfassung für den Betrieb des Nebenaggregats und/oder eine Ansteuerung zum Betrieb des Nebenaggregats übernommen werden. Hierdurch ist es vorteilhaft möglich, ohne großen Aufwand den Antrieb oder Betrieb des Nebenaggregats auf dem Spannungsniveau des Traktionsantriebs, von der ersten Maschine EM1, auslegen zu können, was vorteilhaft bei großen Leistungen des Nebenaggregats zu kleineren und günstigeren elektrischen Antrieben führen kann.

Fig. 4 zeigt eine schematische Darstellung eines elektrischen Antriebssystems gemäß eines weiteren Ausführungsbeispiels der vorliegenden Erfindung.

Die Fig. 4 zeigt ein elektrisches Antriebssystem 1 ähnlich der Darstellung aus der Fig. 1, wobei die Kraftübertragungseinrichtung 6 ein drittes Kopplungselement KE3 umfassen kann, das mit einer Nebenantriebswelle NW kraftschlüssig verbindbar ist, welche mit der zweiten elektrischen Maschine EM2 mechanisch verbunden sein kann, wobei über das dritte Kopplungselement KE3 eine Kraftübertragung zwischen der zweiten elektrischen Maschine EM2 und dem Nebenaggregat 5 herstellbar oder trennbar sein kann. Die Zwischenwelle ZW kann stets ein Teil des Getriebes G sein, wobei eine Übersetzung von Drehzahlen innerhalb des Getriebes G erfolgen kann. Durch das dritte Kopplungselement KE3 kann die zweite elektrische Maschine EM2 vorteilhaft vom Nebenaggregat 5 getrennt werden, wenn diese inaktiv ist oder das Nebenaggregat 5 primär vom Getriebe G angetrieben wird. Es ist jedoch auch möglich, dass die zweite elektrische Maschine mit dem Nebenaggregat 5 von dem Getriebe durch das erste Kopplungselement KE1 getrennt werden. Durch die Trennung vom inaktiven Element, etwa vom Getriebe wenn dieses keine Bewegung erzeugt oder von der zweiten elektrischen Maschine, wenn diese keine Bewegungsenergie erzeugt, können vorteilhaft Schleppverluste (zum Mitdrehen des inaktiven Elements) am Nebenaggregat verringert werden und vorteilhaft die Effizienz des Antriebssystems gesteigert werden.

Die Anordnung des Nebenaggregats 5 und der zweiten elektrischen Maschine EM2 bezüglich des Getriebes und entlang der Nebenantriebswelle NW kann vorteilhaft auch vertauscht werden, so dass die zweite elektrische Maschine EM2 dem Getriebe G näher ist als das Nebenaggregat, wobei das dritte Kopplungselement KE3 zwischen dem Nebenaggregat und der zweiten elektrischen Maschine EM2 und das erste oder zweite Kopplungselement KE1/KE2 zwischen der zweiten elektrischen Maschine EM2 und dem Getriebe angeordnet sein können. Dadurch kann das Nebenaggregat abgekoppelt werden und die zweite elektrische Maschine EM2 mechanische Energie auf das Getriebe G übertragen, ohne das Nebenaggregat mitdrehen zu müssen. Auch in dieser Anordnung ist eine Rekuperation möglich. Dies ist besonders vorteilhaft bei Nebenaggregaten mit hoher Leistung aber nur geringer zeitlicher Einschaltdauer, etwa bei einem LKW mit pneumatischer Bremse bei gefülltem Druckkessel, wenn die zweite elektrische Maschine EM2 als Zusatzantrieb beim Beschleunigen genutzt werden kann.

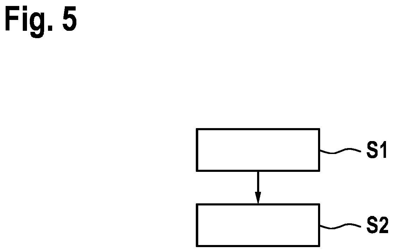

Fig. 5 zeigt eine Blockdarstellung der Verfahrensschritte gemäß der vorliegenden Erfindung.

Bei dem Verfahren zum Betreiben eines elektrischen Antriebssystems erfolgt in einem Verfahrensschritt S1 ein Bereitstellen eines erfindungsgemäßen elektrischen Antriebssystems; und in einem weiteren Verfahrensschritt S2 ein kraftschlüssiges Verbinden oder Trennen der Antriebswelle oder einer Zwischenwelle des Getriebes, wobei ein erster Drehzahlbereich der Antriebswelle sich von einem zweiten Drehzahlbereich der Zwischenwelle unterscheidet, mit der mechanischen Kraftübertragungseinrichtung und dem Nebenaggregat und, nach dem Verbinden, ein Übertragen mechanischer Energie vom Getriebe zum Nebenaggregat oder umgekehrt.

Obwohl die vorliegende Erfindung anhand des bevorzugten Ausführungsbeispiels vorstehend vollständig beschrieben wurde, ist sie darauf nicht beschränkt, sondern auf vielfältige Art und Weise modifizierbar.

## Patentansprüche

1. Elektrisches Antriebssystem (1), umfassend
- einen Traktionsantrieb (TA) mit einer Traktionsbatterie (2), einer ersten elektrischen Maschine (EM1), einem Getriebe (G) und einer Antriebswelle (AW), wobei die Antriebswelle (AW) mit der ersten elektrischen Maschine (EM1) und mit dem Getriebe (G) verbunden ist, und wobei die erste elektrische Maschine (EM1) mittels der Traktionsbatterie (2) antreibbar ist;
- ein Nebenaggregat (5); und
- eine mechanische Kraftübertragungseinrichtung (6), wobei das Nebenaggregat (5) über die mechanischen Kraftübertragungseinrichtung (6) mit dem Getriebe (G) mechanisch verbindbar und/oder trennbar ist, wobei über die Kraftübertragungseinrichtung (6) und über das Getriebe (G) mechanische Energie auf das Nebenaggregat (5) übertragbar ist.

2. Elektrisches Antriebssystem (1) nach Anspruch 1, bei dem die mechanische Kraftübertragungseinrichtung (6) ein Kopplungselement (KE) umfasst, mittels welchem eine Kraftübertragung vom Getriebe (G) auf das Nebenaggregat (5) herstellbar ist.

3. Elektrisches Antriebssystem (1) nach Anspruch 1 oder 2, bei dem die mechanische Kraftübertragungseinrichtung (6) direkt mit der Antriebswelle (AW) kraftschlüssig verbindbar ist.

4. Elektrisches Antriebssystem (1) nach Anspruch 1 oder 2, bei dem das Getriebe (G) eine Zwischenwelle (ZW) umfasst, wobei ein erster Drehzahlbereich der Antriebswelle (AW) sich von einem zweiten Drehzahlbereich der Zwischenwelle (ZW) unterscheidet, und wobei die Zwischenwelle (ZW) oder die Antriebswelle (AW) mit der mechanischen Kraftübertragungseinrichtung (6) kraftschlüssig verbindbar ist.

5. Elektrisches Antriebssystem (1) nach Anspruch 4, rückbezogen auf Anspruch 2, bei dem das Kopplungselement (KE) ein erstes Kopplungselement (KE1) und ein zweites Kopplungselement (KE2) umfasst, wobei über das erste Kopplungselement (KE1) die mechanische Kraftübertragungseinrichtung (6) mit der Antriebswelle (AW) und über das zweite Kopplungselement (KE2) die mechanische Kraftübertragungseinrichtung (6) mit der Zwischenwelle (ZW) kraftschlüssig verbindbar ist.

6. Elektrisches Antriebssystem (1) nach Anspruch 5, bei dem für einen Parksperrmodus die Antriebswelle (AW) über das erste Kopplungselement (KE1) und die Zwischenwelle (ZW) über das zweite Kopplungselement (KE2) gleichzeitig kraftschlüssig mit der mechanischen Kraftübertragungseinrichtung (6) verbindbar sind.

7. Elektrisches Antriebssystem (1) nach einem der Ansprüche 1 bis 6, bei dem das Nebenaggregat (5) einen Klimakompressor, eine Wärmepumpe, eine Drucklufterzeugungseinrichtung, oder eine Hydraulikdruckeinrichtung umfasst.

8. Elektrisches Antriebssystem (1) nach einem der Ansprüche 1 bis 7, welches eine zweite elektrische Maschine (EM2) umfasst, mittels welcher das Nebenaggregat (5) antreibbar und mit mechanischer Energie versorgbar ist.

9. Elektrisches Antriebssystem (1) nach einem der Ansprüche 1 bis 8, welches eine Steuereinrichtung (SE) umfasst, mittels welcher ein Betrieb des Traktionsantriebs (TA) und/oder des Nebenaggregats (5) und/oder der mechanischen Kraftübertragungseinrichtung (6) steuerbar ist.

10. Elektrisches Antriebssystem (1) nach einem der Ansprüche 8 oder 9, soweit rückbezogen auf Anspruch 8, welches ein drittes Kopplungselement (KE3) umfasst, das mit einer Nebenantriebswelle (NW) kraftschlüssig verbindbar ist, welche mit der zweiten elektrischen Maschine (EM2) mechanisch verbunden ist, wobei über das dritte Kopplungselement (KE3) eine Kraftübertragung zwischen der zweiten elektrischen Maschine (EM2) und dem Nebenaggregat (5) herstellbar oder trennbar ist.

11. Elektrisches Antriebssystem (1) nach Anspruch 8 oder 10, wobei der Traktionsantrieb (TA) mittels der zweiten elektrischen Maschine (EM2) antreibbar ist, wobei die zweite elektrische Maschine (EM2) über die mechanische Kraftübertragungseinrichtung (6) mit dem Getriebe (G) mechanisch verbindbar ist.

12. Verfahren zum Betreiben eines elektrischen Antriebssystems (1), umfassend die Schritte:
S1) Bereitstellen eines elektrisches Antriebssystems (1) nach einem der Ansprüche 1 bis 11; und
S2) kraftschlüssiges Verbinden oder Trennen der Antriebswelle (AW) oder einer Zwischenwelle (ZW) des Getriebes (G), wobei ein erster Drehzahlbereich der Antriebswelle (AW) sich von einem zweiten Drehzahlbereich der Zwischenwelle (ZW) unterscheidet, mit der mechanischen Kraftübertragungseinrichtung (6) und dem Nebenaggregat (5) und, nach dem Verbinden, Übertragen mechanischer Energie vom Getriebe (G) zum Nebenaggregat (5) oder umgekehrt.

13. Verfahren nach Anspruch 12, bei dem eine zweite elektrische Maschine (EM2) über ein drittes Kopplungselement (KE3) und eine Nebenantriebswelle (NW) mit dem Nebenaggregat (5) mechanisch verbunden wird und mechanische Energie auf dieses übertragen wird.

14. Verfahren nach Anspruch 13, bei dem eine Kraftübertragung auf das Getriebe (G) durch die zweite elektrische Maschine (EM2) erfolgt.
